# EUROPÄISCHE PATENTSCHRIFT

(11) **EP 2 571 926 B1**
(45) Veröffentlichungstag und Bekanntmachung des Hinweises auf die Patenterteilung: **26.10.2016**
(21) Anmeldenummer: 11724123.2
(22) Anmeldetag: 19.05.2011
(51) Int. Cl.: C08J 5/04, C08K 7/02, B29B 7/00

(54) **VERFAHREN ZUR HERSTELLUNG FASERVERSTÄRKTER THERMOPLASTVERBUNDWERKSTOFFE**
PROCESS FOR THE PRODUCTION OF FIBER-REINFORCED, THERMOPLASTIC COMPOSITES
PROCÉDÉ POUR LA PRÉPARTION DES COMPOSITES THERMOPLASTIQUES ET RENFORCÉS PAR DES FIBRES

(30) Priorität: 21.05.2010 DE 102010022186
(43) Veröffentlichungstag der Anmeldung: 27.03.2013
(73) Patentinhaber: Korte, Hans, Dr., 23966 Wismar (DE)
(72) Erfinder: Korte, Hans, Dr., 23966 Wismar (DE)
(74) Vertreter: Raible Deissler Lehmann Patentanwälte PartG mbB
(86) Internationale Anmeldenummer: PCT/EP2011/002495
(87) Internationale Veröffentlichungsnummer: WO 2011/144341

(56) Entgegenhaltungen:
- WO-A1-99/56936
- WO-A1-2007/056839
- DE-A1- 10 120 975
- DE-A1- 19 808 325
- DE-A1-102007 054 549
- US-B1- 6 284 098
- PRACELLA M ET AL: "Functionalization, compatibilization and properties of polypropylene composites with Hemp fibres", COMPOSITES SCIENCE AND TECHNOLOGY, ELSEVIER, UK, Bd. 66, Nr. 13, 1. Oktober 2006 (2006-10-01), Seiten 2218-2230, XP025128615, ISSN: 0266-3538, DOI: 10.1016/J.COMPSCITECH.2005.12.006 [gefunden am 2006-10-01]
- DATABASE WPI Week 200243 Thomson Scientific, London, GB; AN 2002-397652 XP002660255, & JP 2002 003723 A (KONICA CORP) 9. Januar 2002 (2002-01-09)
- DATABASE WPI Week 201029 Thomson Scientific, London, GB; AN 2010-E37048 XP002660256, & JP 2010 089483 A (DAISERU POLYMER KK) 22. April 2010 (2010-04-22)

## Beschreibung

Vorliegende Erfindung betrifft die Herstellung von Verbundwerkstoffen aus aufgelösten Faserknäueln und Thermoplasten die mittels Innenkneter kompoundiert werden.

Die Verstärkung von thermoplastischen Kunststoffen mit Fasern, überwiegend mit Glasfasern in Form von Kurzfasern ist als Stand der Technik bekannt. Voraussetzung für die Kompoundierung in gängigen Kunststoffverarbeitungsmaschinen, wie z.B. Doppelschneckenextrudern, ist eine gute Dosierbarkeit der Fasern. Dies ist bei Glasfasern gut, bei anderen Fasern, wie z.B. Naturfasern oder organischen Synthesefasern aufgrund starker gegenseitiger Anhaftung, Verhakung oder Verknäuelung nur schwer zu realisieren. Aus diesem Grund werden sogenannte Langfasergranulate z.B. mit Pultrusionsverfahren hergestellt (z.B. AT 411 661; UK 1 439 327; US 5 725 954; US 3 993 726). Beim Pultrusionsverfahren wird eine Schar von Fäden durch eine Düse gezogen oder gedrückt und dabei mit geschmolzenem Polymer durchtränkt und/oder umhüllt. Die Durchsatzgeschwindigkeiten sind mit wenigen Metern pro Minute relativ langsam und der Gesamtdurchsatz ist zudem gering, weil jeweils nur ein Strang in einer Düse imprägniert werden kann. Wenn für die Kunststoffindustrie übliche Granulate für den Spritzguss hergestellt werden sollen, dann sollte der Strangdurchmesser des fertigen Verbundwerkstoffs bei der Herstellung von Granulaten nicht mehr als 6 - 10 mm betragen, um problemlos von Extruderschnecken eingezogen werden zu können.

In DE 10 2005 040 620 wird die Herstellung glasfaserverstärkter Polymerzusammensetzungen beschrieben, die gemäß Abbildung und Beschreibung: "Dies bedeutet, dass die Glasfaser oder andere Fasern ... kontinuierlich in den Benetzungs- bzw. Imprägnierprozess unterzogen werden" einem Pultrusionsverfahren gleicht, obwohl für die Kompoundierung die "üblichen Aggregate wie Innenkneter, Extruder und Doppelwellenschnecken ..." genannt werden. Das Produkt wird als Langfasergranulat mit unidirektional angeordneten Filamenten beschrieben, was ein direktes Kneten der Fasern in der Kunststoffmatrix ausschließt. Alternativ zum Pultrusionsverfahren wurden in neuerer Zeit textile Verfahren vorgestellt, um Langfasergranulate herzustellen (DE 197 11 247; EP 1 097 033). Im Wesentlichen werden bei diesen Verfahren Verstärkungsfasern und Thermoplastfasern gemeinsam zu einem dicken Garn verzwirnt und durch Anschmelzen der Thermoplastfasern zu einem festen Strang fixiert, der nach Abkühlung auf Granulatlänge geschnitten wird. Diese textilen Verfahren können zwar schneller Arbeiten, erzeugen aber ebenfalls jeweils nur einen Strang (von 6 - 10 mm) pro Einheit. Die Verwendung von "Klebefasern", die in vorgelagerten Prozessen hergestellt werden müssen, macht diesen Prozess zusätzlich teuer.

Aufgabe der vorliegenden Erfindung ist es, ein Verfahren anzubieten, mit dem relativ preiswert faserverstärkte Thermoplastverbundwerkstoffe in großen Mengen hergestellt werden können. Die Aufgabe wird gelöst durch ein Verfahren zur Herstellung faserverstärkte Thermoplastverbundwerkstoffe dadurch gekennzeichnet, dass Faserknäuel und Thermoplasten diskontinuierlich in Innenknetern kompoundiert und dabei die Faserknäuel vereinzelt und die Einzelfasern homogen verteilt werden. Der Einsatz von Faserknäueln hilft die Kosten zu reduzieren, da verknäuelte Faserreste von Produktionsabfällen oder aus Faserpulpen, die häufig aus Recyclingware hergestellt werden, eingesetzt werden können

Ein wesentlicher Unterschied der Knetertechnologie zur Kompoundierung mit Doppelschneckenextrudern (DSE) ist der, dass Kneter diskontinuierlich, DSE jedoch kontinuierlich betrieben werden. Beim kontinuierlichen Betrieb ist die genaue gravimetrische Dosierung aller Komponenten eine wesentliche Voraussetzung, um Verbundwerkstoffe mit einheitlicher Zusammensetzung zu erhalten. Da Fasern gerne zum Verhaken neigen, sind sie nur sehr schwer kontinuierlich gravimetrisch exakt zu dosieren. Kneter aus der Kautschukindustrie kennen dieses Problem nicht, da sie diskontinuierlich arbeiten, d.h. zu Beginn wird der Kneter mit zuvor ausgewogenen Anteilen der Rezeptur beladen, der Knetvorgang wird gestartet, ggf. werden während des Knetprozesses weitere Rezepturbestandteile dazugegeben und nach einer, der jeweiligen Rezeptur zugehörigen Zeit wird der Knetprozess durch Öffnen einer Schleuse, bei der der Kneterinhalt ausgeworfen wird, beendet. Das Material, das den Kneter verlässt, sind ein oder mehrere Stücke Verbundwerkstoff, die entweder in Kalandern zu Platten oder Folien z.B. mit Materialdicken von 0,2 mm bis 15 mm, bevorzugt von 0,5 mm bis 10 mm, besonders bevorzugt 1 mm bis 6 mm gewalzt oder in speziellen DSE zu Granulat von 2 mm bis 15 mm, bevorzugt von 3 mm bis 8 mm und besonders bevorzugt 4 mm bis 6 mm für die Weiterverarbeitung umgeformt werden. Bei den DSE handelt es sich dabei nicht um die oben erläuterten Aggregate, die Thermoplasten aufschmelzen müssen, sondern um konische, gegenläufige Fördereinrichtungen, die geeignet sind, den heißen thermoplastischen Verbundwerkstoff durch eine Lochplatte zur anschließenden Granulierung zu pressen.

Die Innenkneter der Harburg Freudenberger AG können bis zu mehrere Tonnen Kautschuk bzw. Thermoplastverbundwerkstoffe pro Stunde verarbeiten und erreichen damit industrielle Größenordnungen, die mit oben genannten Pultrusionsverfahren nicht erreichbar sind. Bei der Anwendung der Knetertechnologie auf die Herstellung thermoplastischer Faserverbundwerkstoffe hat sich unerwarteter Weise herausgestellt, dass auch sehr schwierig zu dosierende und schwierig zu vermischende Fasern wie geknäuelte Langfasern aber auch Faserpulpen in thermoplastischer Matrix hervorragend homogen verteilt werden können. Unter geknäuelten Langfasern sind in diesem Zusammenhang Faserknäuele biologischer oder organischer, natürlicher oder synthetischer Herkunft zu verstehen, die Faserlängen von größer 30 mm, bevorzugt größer 50 mm aufweisen, die in ungeordneter, dreidimensional verschlungener Form vorliegen. Sie unterscheiden sich damit wesentlich von Langfasern die in faserorientierter Form, z.B. als Garne, Filamentbündel (Rowings) oder Kardenbänder den Pultrusionsprozessen zugeführt werden. Die typischen Durchmesser von Synthesefasern liegen zwischen 10 und 20 µm, wobei kleinere und höhere Werte hiermit nicht ausgeschlossen werden. Bevorzugt werden im erfindungsgemäßen Verfahren unbeschichtete Fasern eingesetzt.

Gegenstand der Erfindung ist ein einstufiges Verfahren zur Herstellung faserverstärkter Thermoplastverbundwerkstoffe dadurch gekennzeichnet, dass Faserknäuel biologischer oder organischer, natürlicher oder synthetischer Herkunft und Thermoplasten diskontinuierlich in Innenknetern kompoundiert und dabei die Faserknäuel vereinzelt und die Einzelfasern homogen in der Thermoplastmatrix verteilt werden, wobei die Faserknäuel dreidimensional verschlungene Langfasern mit Faserlängen von größer 30 mm Länge aufweisen. In einer Ausführungsform weisen die Faserknäuel dreidimensional verschlungene Langfasern mit mehr als 50 mm Länge auf.

In einer Ausführungsform der Erfindung bestehen die Faserknäuel aus Aramid, Polyacrylnitril (PAN), natürlichen oder synthetischen Cellulosefasern, oder aus Mischungen von zwei oder mehreren der genannten Materialtypen. In einer Ausführungsform ist das Aramid para-Aramid. In einer Ausführungsform sind die natürlichen oder synthetischen Cellulosefasern Hanf, Flachs, Zellstoff, Papier oder Lyocellfasern. In einer anderen Ausführungsform sind die natürlichen oder synthetischen Cellulosefasern Viscose oder Rayon.

In einer Ausführungsform der Erfindung bestehen die Thermoplasten z.B. aus den Materialgruppen der Polyolefine, wie z.B. Polyethylene (PE) oder Polypropylene (PP) und deren Co-polymere, der Polyamide (PA) und deren Co-Polymere, der styrolbasierten Polymere, z.B. Polystyrol (PS), Acrylnitril-Butadien-Styrol (ABS), Acrylester-Styrol-Acrylnitril (ASA) und deren Co-Polymere, der Cellulosederivate, z.B. Celluloseacetat (CA), der Polyester, z.B. Polyethylenterephthalat (PET) und deren Co-Polymere, der Polymethacrylate, z.B. Polymethylmethacrylat (PMMA), der Biopolymere, z.B. der Polymilchsäure (PLA) oder aus Mischungen von zwei oder mehreren der genannten Polymeren.

In einer Ausführungsform ist das Polyolefin Polyethylen (PE) oder Polypropylen (PP). In einer weiteren Ausführungsform ist das styrolbasierte Polymer Polystyrol (PS), Acrylnitril-Butadien-Styrol (ABS), oder Acrylester-Styrol-Acrylnitril (ASA). In einer Ausführungsform ist das Cellulosederivat Celluloseacetat (CA). In einer Ausführungsform ist der Polyester Polyethylenterephthalat (PET). In einer Ausführungsform ist das Polymethacrylat Polymethylmethacrylat (PMMA). In einer Ausführungsform ist das Biopolymer Polymilchsäure (PLA).

Die Arbeitsweise eines Kneters beruht darauf, dass zwei Knetschaufeln das zu knetende Material zwischen sich und der umgebenden Gehäusewand umwälzen, wobei durch die Geometrie der Knetschaufeln sich Druckspannungsspitzen und Entlastungsphasen abwechseln. Auf diese Weise wird das Material geschert und es entsteht in kurzer Zeit Reibungswärme, die die Knetmasse schnell erwärmt. Technisch aufwendig konstruierte Kneter verfügen über eine innere Temperierung der Kneterschaufeln, die es ermöglicht punktuellen Überhitzungen des Knetmaterials durch geeignete Steuerung der Temperierung entgegen zu wirken. Durch Steuerung von Drehzahl und Temperierung lässt sich die Aufheizrate steuern. Mit einem Kneter lassen sich daher mehrere Funktionen, die bei der Kompoundierung von Fasern, speziell von feuchten Naturfasern von Interesse sind, kombinieren. Diese Funktionen, wie Vermischen, Homogenisieren, Kürzen von Fasern, Trocknen und Aufheizen bis oder über den Schmelzpunkt des oder der Thermoplasten und ggf. Einkneten von Thermoplastmatrix in vorhandene Hohlräume von Zellstrukturen des Fasermaterials, sind je nach Prozessfahrweise mit unterschiedlicher Gewichtung zu versehen und ermöglichen rezepturabhängige Optimierung der Verbundwerkstoffe.

Der Faseranteil im Verbundmaterial kann in Gewichtsprozenten von 3% bis 80%, bevorzugt von 10% - 50% und besonders bevorzugt von 15% bis 35% variieren.

In einer Ausführungsform der Erfindung werden der Mischung von Thermoplasten und Fasern 1 bis 5 Gew.-% Haftvermittler zugesetzt.

In einer Ausführungsform der Erfindung betragen die Knetzeiten 2 bis 30 Minuten, beispielsweise 4 bis 10 Minuten.

Durch Anwendung des erfindungsgemäßen Verfahrens lässt sich ein Thermoplastverbundwerkstoff erhalten, dessen Zug-E-Modul gegenüber dem unverstärkten Thermoplasten um mindestens 25%, bevorzugt um mehr als 50% und besonders bevorzugt um mehr als 100% und dessen Schlagzähigkeit um den Faktor 1,1 bis 10, bevorzugt um den Faktor 1,2 bis 8 und besonders bevorzugt um den Faktor 2 bis 5 erhöht sind.

Der durch das erfindungsgemäße Verfahren erhältliche Thermoplastverbundwerkstoff kann in Partikelform mit Partikeldurchmessern von 2 mm bis 15 mm, beispielsweise 3 mm bis 8 mm, oder 4 bis 6 mm zur Weiterverarbeitung bereitgestellt werden. Der Thermoplastverbundwerkstoff kann auch in Form von Folien oder Platten zur Weiterverarbeitung bereitgestellt werden. Die Folien oder Platten können Materialdicken von 0,2 mm bis 15 mm, z.B. von 0,5 mm bis 10 mm, oder von 1 mm bis 6 mm aufweisen.

### Beispiele

### Beispiel 1

30,6 kg, bestehend aus 30 Gewichtsteilen Langfaserhanf (Ba-Fa Badische Naturfaser GmbH, Typ VF6) mit 8% Feuchte, 70 Gewichtsteilen Polypropylen (Clyrell EM 248U) und 2 Gewichtsteilen Maleinsäureanhydrid gepfropftes Polypropylen als Haftvermittler (Exxelor PO 1020) wurden gemeinsam in einen Innenkneter (Harburg Freudenberger Typ 45) dosiert und bei 190 Umdrehungen pro Minute für 5 Minuten geknetet. Die Knetermischung wurde aus dem Kneter in einen konischen, gegenläufigen Doppelschneckenextruder überführt und durch ein Lochplattenwerkzeug mit 10 mm Lochdurchmessern gedrückt bevor sie jenseits des Lochplattenwerkzeugs mittels Unterwassergranulierung in einzelne Granulatkörner granuliert wurde. Das Granulat wurde über eine Zentrifuge entwässert und auf einer Rüttelrinne bis zur Verpackung weiter abgekühlt. Das resultierende Langfasergranulat wurde auf einer Spritzgussmaschine (Arburg 420 C) zu Schulterstäben gespritzt, von denen der Zug-E-Modul, die Zugfestigkeit die Zugdehnung und die Schlagzähigkeit ermittelt wurden (siehe Tabelle 1).

### Beispiel 2 (nicht erfindungsgemäß)

Konzentrationen und Vorgehensweise wie in Beispiel 1, nur dass anstelle von Langfasern, Kurzfasern (BaFa Badische Naturfaser GmbH, Typ KFS, fein) eingesetzt wurden.

### Beispiel 3 (nicht erfindungsgemäß)

Konzentrationen und Vorgehensweise wie in Beispiel 1, nur dass anstelle von Langfasern, Faserpulpe (BaFa Badische Naturfaser GmbH, Typ SKF 2) eingesetzt wurden.

### Beispiel 4 (nicht erfindungsgemäß)

Als Faserrohstoff wird p-Aramidpulpe (Teijin AG, Twaron 1095) mit 10 Gewichtsteilen und Polyamid 6 (Ravamid R 200 S) mit 90 Gewichtsanteilen ohne Haftvermittler eingesetzt. Die Knetzeit wird auf 7 min. erhöht, um die Schmelztemperatur des PA6 von 240° C zu erreichen und geringfügig zu überschreiten. Die Pelletierung und Prüfung erfolgte wie in Beispiel 1.

**Tabelle 1**

| Zug- und Schlagfestigkeit von 3 Knetermischungen von PP mit Hanffasern und einer Mischung von PA6 mit p-Aramidpulpe. | | | | | | |
|---|---|---|---|---|---|---|
| Verstärkungsfaser | Matrix Kunststoff | Faseranteil [%] | Zug-E-Modul [MPa] | Zugfestigkeit [MPa] | Zugdehnung [%] | Schlagzähigkeit [kJ/m²] |
| -* | PP | 0 | 950 | 26 | > 50 | 8 |
| Hanf-Langfaser | PP | 30 | 2543 | 31 | 6 | 11 |
| Hanf-Kurzfaser* | PP | 30 | 2290 | 27 | 5 | 8 |
| Hanfpulpe* | PP | 30 | 1613 | 23 | 8 | 10 |
| -* | PA6 | 0 | 3200 | 83 | 20 | 5,5 |
| Aramidpulpe* | PA6 | 10 | 3617 | 72 | 8 | 27 |

| | | | | | | |
|---|---|---|---|---|---|---|
| * nicht erfindungsgemäß | | | | | | |

Wie aus Tabelle 1 zu ersehen, werden durch das Einkneten von Fasern und Faserpulpen die Zug-E-Module um bis zu 270% erhöht, die Zugfestigkeiten schwanken von einer leichten Erniedrigung bis zu einer leichten Erhöhung, die Zugdehnung wird stark reduziert und die Schlagzähigkeit bei Hanf-PP-Compounds leicht, um den Faktor 1,25 bis 1,37, hingegen bei PA6-Aramid-Compounds erheblich, um annähernd den Faktor 5 erhöht.

### Beispiel 5

Fasern und Polypropylen sowie Haftvermittler wurden in den in Tabelle 2 angegebenen Anteilen gemeinsam in einen Innenkneter (Harburg Freudenberger Typ GK 5 E, Füllvolumen 5,5 l) dosiert und bei 190 Umdrehungen pro Minute für 5 Minuten geknetet. Die Knetermischung wurde aus dem Kneter in einen konischen, gegenläufigen Doppelschneckenextruder überführt und durch ein Lochplattenwerkzeug mit 10 mm Lochdurchmessern gedrückt bevor sie jenseits des Lochplattenwerkzeugs mittels Unterwassergranulierung in einzelne Granulatkörner granuliert wurde. Das Granulat wurde über eine Zentrifuge entwässert und auf einer Rüttelrinne bis zur Verpackung weiter abgekühlt. Das resultierende Granulat wurde auf einer Spritzgussmaschine (Arburg 420 C) zu Schulterstäben gespritzt, von denen der Zug-E-Modul, die Zugfestigkeit die Zugdehnung und die Schlagzähigkeit ermittelt wurden (siehe Tabelle 3).

**Tabelle 2**

| Versuchsnummer | Füllgrad [%] | Polymer | Anteil [%w/w] | Fasertyp | Anteil [%w/w] | Haftvermittler | Anteil [w/w] |
|---|---|---|---|---|---|---|---|
| 1* | 75 | PP Homo HC205TF MFR 4 (echte Dichte 0,905 g/cm³) | 68 | STW Lyocell Pulp PLY VZL | 30,00 | Scona TPPP 8112 FA | 2 |
| 2* | 75 | PP Homo HC205TF MFR 4 | 88 | STW Lyocell Pulp PLY VZL | 10,00 | Scona TPPP 8112 FA | 2 |
| 3* | 75 | PP Homo HC205TF MFR 4 | 68 | Lenzing Tencel FCP 10/490 | 30,00 | Scona TPPP 8112 FA | 2 |
| 4* | 75 | PP Homo HC205TF MFR 4 | 88 | Lenzing Tencel FCP 10/490 | 10,00 | Scona TPPP 8112 FA | 2 |
| 5* | 75 | PP Homo HC205TF MFR 4 | 68 | Lenzing-Viscose Kurzschnitt 6mm 1,4 dn | 30,00 | Scona TPPP 8112 FA | 2 |
| 6* | 75 | PP Homo HC205TF MFR 4 | 88 | Lenzing-Viscose Kurzschnitt 6mm 1,4 dn | 10,00 | Scona TPPP 8112 FA | 2 |
| 14 | 75 | PP Homo HC205TF MFR 4 | 68 | Cordenka 1840 f 1000 RT 700 Twist 100 | 30,00 | Scona TPPP 8112 FA | 2 |
| 15 | 75 | PP Homo HC205TF MFR 4 | 88 | Cordenka 1840 f 1000 RT 700 Twist 100 | 10,00 | Scona TPPP 8112 FA | 2 |
| 17* | 75 | PP Copo Clyrell EM248U MFR 70 | 68 | Lenzing-Viscose Kurzschnitt 12 mm 1,7 dn | 30,00 | Scona TPPP 8112 FA | 2 |
| 18* | 75 | PP Copo Clyrell EM248U MFR 70 | 88 | Lenzing-Viscose Kurzschnitt 12 mm 1,7 dn | 10,00 | Scona TPPP 8112 FA | 2 |

| | | | | | | | |
|---|---|---|---|---|---|---|---|
| * nicht erfindungsgemäß | | | | | | | |

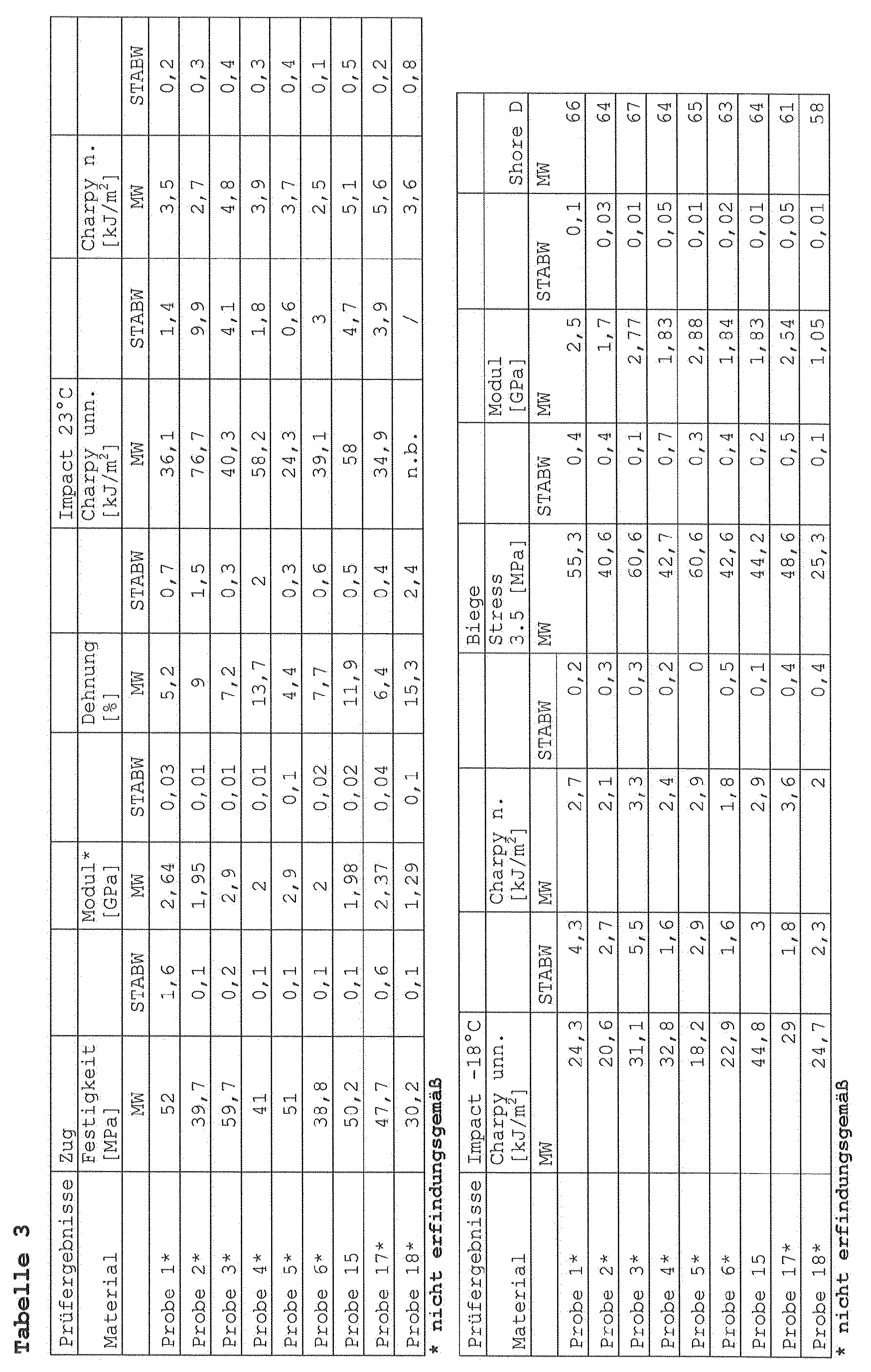

## Patentansprüche

1. Einstufiges Verfahren zur Herstellung faserverstärkter Thermoplastverbundwerkstoffe **dadurch gekennzeichnet, dass** Faserknäuel biologischer oder organischer, natürlicher oder synthetischer Herkunft, wobei die Faserknäuel dreidimensional verschlungene Langfasern mit Faserlängen von größer 30 mm aufweisen, und Thermoplasten diskontinuierlich in Innenknetern kompoundiert und dabei die Faserknäuel vereinzelt und die Einzelfasern homogen in der Thermoplastmatrix verteilt werden.

2. Verfahren nach Anspruch 1, bei dem die Faserknäuel aus Aramid, Polyacrylnitril (PAN), natürlichen oder synthetischen Cellulosefasern, oder aus Mischungen von zwei oder mehreren der genannten Materialtypen bestehen.

3. Verfahren nach Anspruch 2, bei dem das Aramid para-Aramid ist.

4. Verfahren nach Anspruch 2, bei dem die natürlichen oder synthetischen Cellulosefasern Hanf, Flachs, Zellstoff, Papier oder Lyocellfasern sind.

5. Verfahren nach Anspruch 2, bei dem die natürlichen oder synthetischen Cellulosefasern Viscose oder Rayon sind.

6. Verfahren nach einem der Ansprüche 1 bis 5, bei dem der Faseranteil 3-80 Gewichtsprozent beträgt.

7. Verfahren nach einem der Ansprüche 1 bis 6, bei dem die Thermoplasten aus den Materialgruppen der Polyolefine und deren Copolymere, der Polyamide (PA) und deren Copolymere, der styrolbasierten Polymere und deren Copolymere, der Cellulosederivate, der Polyester und deren Copolymere, der Polymethacrylate, der Polymilchsäure (PLA) ausgewählt sind oder aus Mischungen von zwei oder mehreren der genannten Polymeren bestehen.

8. Verfahren nach Anspruch 7, bei dem das Polyolefin Polyethylen oder Polypropylen ist.

9. Verfahren nach Anspruch 7, bei dem das styrolbasierte Polymer Polystyrol (PS), Acrylnitril-Butadien-Styrol (ABS) oder Acrylester-Styrol-Acrylnitril (ASA) ist.

10. Verfahren nach Anspruch 7, bei dem das Cellulosederivat Celluloseacetat (CA) ist.

11. Verfahren nach Anspruch 7, bei dem der Polyester Polyethylenterephthalat (PET) ist.

12. Verfahren nach Anspruch 7, bei dem das Polymethacrylat Polymethylmethacrylat (PMMA) ist.

## Claims

1. A one-step process for producing fiber-reinforced thermoplastic compounds, **characterized in that** fiber ravels of biological or organic, natural or synthetic origin, the fiber ravels comprising three-dimensionally entangled long fibers having fiber lengths of more than 30 mm, and thermoplastic resins are compounded discontinuously using internal kneaders, whereby the fibers of the fiber ravels are separated, and the single fibers are homogeneously distributed in the thermoplastic matrix.

2. The process of claim 1, wherein the fiber ravels consist of aramid, polyacrylonitrile (PAN), natural or synthetic cellulose fibers, or mixtures of two or more of said types of material.

3. The process of claim 2, wherein the aramid is para-aramid.

4. The process of claim 2, wherein the natural or synthetic cellulose fibers are hemp, flax, pulp, paper or lyocell fibers.

5. The process of claim 2, wherein the natural or synthetic cellulose fibers are viscose or rayon.

6. The process of any one of claims 1 to 5, wherein the fiber content is 3 to 80 percent by weight.

7. The process of any one of claims 1 to 6, wherein the thermoplastic resin is selected from the group of materials consisting of polyolefin resins and their copolymers, polyamides (PA) and their copolymers, styrene-based polymers and their copolymers, cellulose derivatives, polyesters and their co-polymers, polymethacrylates, and polylactic acid (PLA); or consists of mixtures of two or more of said polymers.

8. The process of claim 7, wherein the polyolefin is polyethylene or polypropylene.

9. The process of claim 7, wherein the styrene-based polymer is polystyrene (PS), acrylonitrile-butadiene-styrene (ABS) or acrylic ester-styrene-acrylonitrile (ASA).

10. The process of claim 7, wherein the cellulose derivative is cellulose acetate (CA).

11. The process of claim 7, wherein the polyester is polyethylene terephthalate (PET).

12. The process of claim 7, wherein the polymethacrylate is polymethyl methacrylate (PMMA).

## Revendications

1. Procédé en une seule étape de production de matériaux composites thermoplastiques renforcés par des fibres, dans lequel des pelotes de fibres et de matières thermoplastiques sont entremêlés de manière discontinue dans des malaxeurs internes et les fibres des pelotes sont alors séparées et les fibres individuelles sont dispersées de manière homogène dans la matrice thermoplastique, les pelotes de fibres étant d'origine biologique ou organique, naturelle ou synthétique, et les pelotes de fibres présentant des fibres longues d'une longueur supérieure à 30mm, entrelacées en trois dimensions.

2. Procédé selon la revendication 1 dans lequel les pelotes de fibres sont composées d'aramide, de polyacrylonitrile (PAN), de fibres cellulosiques d'origine naturelle ou synthétique, ou bien de mélanges de deux ou plusieurs des matériaux cités.

3. Procédé selon la revendication 2 dans lequel l'aramide est du para-aramide.

4. Procédé selon la revendication 2, dans lequel les fibres cellulosiques d'origine naturelle ou synthétique consistent en de chanvre, de lin, de pâte, de papier ou de fibres lyocell.

5. Procédé selon la revendication 2, dans lequel les fibres cellulosiques d'origine naturelle ou synthétique consistent en de viscose ou de rayonne.

6. Procédé selon l'une quelconque des revendications 1 à 5, dans lequel la proportion de fibres est de 3-80% en poids.

7. Procédé selon l'une quelconque des revendications 1 à 6, dans lequel les matériaux thermoplastiques sont sélectionnés du groupe de matériaux contenant des polyoléfines, y compris leurs copolymères, des polyamides (PA), y compris leurs copolymères, des polymères à base de styrène, y compris leurs copolymères, des dérivés cellulosiques, des polyesters, y compris leurs copolymères, des polyméthacrylates, et de l'acide polylactide (PLA), ou bien sont composés de deux ou plusieurs des polymères cités.

8. Procédé selon la revendication 7, dans lequel le polyoléfine est polyéthylène ou polypropylène.

9. Procédé selon la revendication 7, dans lequel le polymère à base de styrène consiste en polystyrène (PS), acrylonitrile-butadiène-styrène (ABS), ou acrylonitrilestyrène-acrylate (ASA).

10. Procédé selon la revendication 7, dans lequel le dérivé de cellulose consiste en acétate de cellulose.

11. Procédé selon la revendication 7, dans lequel le polyester consiste en polyéthylène-téréphtalate (PET).

12. Procédé selon la revendication 7, dans lequel le polyméthacrylate consiste en poly(méthacrylate de méthyle) (PMMA).
